# EUROPÄISCHE PATENTSCHRIFT

(11) **EP 3 207 296 B1**
(45) Veröffentlichungstag und Bekanntmachung des Hinweises auf die Patenterteilung: **03.08.2022**
(21) Anmeldenummer: 15766138.0
(22) Anmeldetag: 17.09.2015
(51) Int. Cl.: F16L 23/032, G01F 23/00

(54) **HYBRID-FLANSCH**
HYBRID FLANGE
BRIDE HYBRIDE

(30) Priorität: 15.10.2014 DE 102014114941
(43) Veröffentlichungstag der Anmeldung: 23.08.2017
(73) Patentinhaber: Endress+Hauser SE+Co. KG, 79689 Maulburg (DE)
(72) Erfinder: SULZER, Thomas, CH-4058 Basel (CH); SEEFELD, Peter, 74206 Bad Wimpfen (DE); KAISER, Ulrich, CH-4057 Basel (CH); LOPATIN, Sergej, 79540 Lörrach (DE); HUBER, Christof, CH-3007 Bern (CH); KLÖFER, Peter, 79585 Steinen (DE); TOUZIN, Mike, 79585 Höllstein (DE)
(74) Vertreter: Andres, Angelika Maria
(86) Internationale Anmeldenummer: PCT/EP2015/071275
(87) Internationale Veröffentlichungsnummer: WO 2016/058777

(56) Entgegenhaltungen:
- EP-A1- 0 100 579
- EP-A1- 0 100 580
- WO-A1-2009/059057
- WO-A2-2007/126892
- DE-A1-102007 037 166
- US-A- 2 837 354
- US-A- 3 899 006
- US-A- 4 388 834
- US-A- 5 773 723
- US-A1- 2007 295 102
- US-A1- 2010 263 761
- US-A1- 2011 308 304
- US-B1- 6 257 071
- US-B1- 6 361 080

## Beschreibung

Die Erfindung betrifft eine Vorrichtung zur Bestimmung und/oder Überwachung mindestens einer physikalischen oder chemischen Prozessgröße eines Mediums in einem Behältnis umfassend zumindest ein Sensorelement, zumindest ein Gehäusemodul und zumindest einen Flansch.

Entsprechende Feldgeräte werden von der Anmelderin in großer Vielfalt hergestellt und vertrieben. Die zu bestimmende und/oder zu überwachende Prozessgröße ist beispielsweise der Durchfluss eines strömenden Fluides durch ein Messrohr, oder der Füllstand eines Mediums in einem Behälter. Sie kann aber auch durch den Druck, die Dichte, die Viskosität, die Leitfähigkeit, die Temperatur oder den ph-Wert gegeben sein. Auch optische Sensoren, wie Trübungs- oder Absorptionssensoren sind bekannt.

Die Herstellung einer Flanschverbindung zwischen einem Feldgerät und einem Behältnis ist ein verbreiteter Standard zur dichten und lösbaren Verbindung in der Industrie. Entsprechend weisen übliche Behältnisse oftmals eine genormte Öffnung mit einem Gegenflansch, welcher üblicherweise direkt an das Behältnis angeschweißt ist, auf. Ähnlich ist der Flansch oftmals direkt an das Feldgerät angeschweißt.

Unter dem Begriff Behältnis sind sowohl Rohrleitungen als auch Behälter, beispielsweise ein Tank, zu verstehen. Feldgeräte, welche der Messung eines Durchflusses dienen, werden üblicherweise mittels zweier Flanschverbindungen in eine bestehende Rohrleitung integriert. Soll wiederum der Füllstand in einem Behälter bestimmt und/oder überwacht werden, so wird in der Regel nur ein Flansch benötigt, mittels welchem das Messgerät an einen Behälter mit einem entsprechenden Gegenflansch montiert wird, beispielsweise in oder an einem Stutzen im Behälter.

Die Sensoreinheit und der Flansch sind üblicherweise mit dem mindestens einen Gehäusemodul verbunden derart, dass im Betrieb des Feldgeräts die Sensoreinheit die zumindest eine Prozessgröße bestimmen und/oder überwachen kann. Zwischen dem Gehäusemodul und dem Flansch kann weiterhin ein Halsrohr zur Temperaturisolation angeordnet sein. Die Integration eines Feldgeräts mittels einer Flanschverbindung ist in der Regel dann sinnvoll, wenn die Sensoreinheit aufgrund des jeweils angewandten Messprinzips zumindest teilweise und zumindest zeitweise mit dem Medium in Kontakt treten muss. Entsprechend sollte die Anordnung des zumindest einen Flansches und der Sensoreinheit mit dem Gehäusemodul dies gewährleisten. Im Falle eines Füllstandsmessgeräts beispielsweise ist es zweckdienlich, wenn der Flansch die Sensoreinheit im Bereich, in welchem die Sensoreinheit mit dem Gehäusemodul verbunden ist, und ggf. zum Teil in dieses hineinragt, umgibt.

Darüber hinaus kann der Vorrichtung eine Elektronikeinheit zugeordnet sein, welche entweder in unmittelbarer Näher zum Sensorelement oder räumlich davon getrennt sein kann. Somit ist die Elektronikeinheit entweder im selben Gehäusemodul wie das Sensorelement untergebracht, oder aber in einem separaten zweiten Gehäusemodul.

Bei einer Schraubverbindung zweier Flansche korreliert die Dichtigkeit der Flanschverbindung mit dem Anpressdruck der Dichtflächen der beiden Flansche auf eine dazwischen angeordnete Dichtung und wird oftmals mittels Schrauben aufgebracht, welche durch Bohrungen in den Flanschblättern gesteckt sind. Es versteht sich jedoch von selbst, dass neben einer geschraubten Verbindung auch andere Methoden der Verbindung zweier Flansche bestehen. Beispielsweise können die beiden Flansche auch direkt aneinandergeschweißt werden.

Ein besonders häufig verwendetes Material sowohl für Behältnisse als auch für Flansche ist rostfreier Edelstahl. Aber auch andere Metalle wie beispielsweise Tantal, Hastalloy oder Verbundwerkstoffe, z. B. Kohlenstoffstahl, werden für spezifische Anwendungen verwendet. In der Praxis ergibt sich, dass ein Flansch aus Metall bis zu 50% des Gesamtgewichts eines Feldgeräts und bis zu 30% der Gesamtkosten ausmachen kann. Bei selteneren und/oder teureren Materialien wie Tantal können die Kosten sogar noch höher sein.

Neben Metallen werden in der Industrie unter anderem Keramiken und Kunststoffe eingesetzt. Letztere zeichnen sich insbesondere durch ihr geringeres Gewicht, ihre chemische Beständigkeit und der in vielen Bereichen hinreichenden thermischen Beständigkeit aus. Darüber hinaus sind Kunststoffteile oft kostengünstiger im Vergleich zu Metallen.

Seit einiger Zeit sind auch faserverstärkte Kunststoffflansche bekannt, für welche man über die Ersparnisse in Bezug auf Gewicht und Kosten hinaus eine erhöhte Festigkeit bzw. Steifigkeit der jeweiligen Teile erzielen kann. Außerdem erhält man durch eine flexible Prozesstechnologie die Möglichkeit, die jeweiligen Teile durch gezielte Nutzung der anisotropen Eigenschaften beanspruchungsgerecht zu gestalten.

Die wichtigsten Anforderungen an eine Flanschverbindung bestehen darin, dass die Flanschverbindung eine dichte und stabile Verbindung gewährleistet. Darüber hinaus sollte der Flansch im dem Medium zugewandten Bereich den Prozess und/oder das Medium nicht beeinflussen.

Dichtigkeitsprobleme können unter anderem auftreten, wenn der jeweilige Flansch und das jeweilige Behältnis aus unterschiedlichen Materialien gefertigt sind. Aufgrund von unterschiedlichen Temperaturausdehnungskoeffizienten kann es dann bei großen Temperaturänderungen zu einer strukturellen Integritätszerstörung der Flanschverbindung kommen.

Ähnlich können unterschiedliche Materialien für Behältnis und Flansch im medienberührenden Bereich unterschiedliche Reaktion mit demselben Medium zeigen. Beispielsweise kann eine elektrochemische Reaktion aufgrund unterschiedlicher Redoxpotentiale zweier Materialien auftreten.

Aus diesen Gründen wird üblicherweise für den Flansch das gleiche Material gewählt wie für das Behältnis. Da Behältnisse mehrheitlich aus Metallen bestehen, finden also auch mehrheitlich die schwereren und teilweise teureren Metallflansche Anwendung, obwohl Kunststoffe, faserverstärkte Kunststoffe oder ähnliche Materialien in Bezug auf das Gewicht und die Kosten vorteilhafter wären.

US4388834A beschreibt ein nach dem magnetisch-induktiven Messprinzip arbeitendes Durchflussmessgerät gemäß der Präambel des Anspruchs 1, bei welchem das Messrohr mit einem Liner ausgekleidet ist.

Der vorliegenden Erfindung liegt die Aufgabe zugrunde, einen kostengünstigen, leichten Flansch bereitzustellen, welcher für beliebige Behältnisse einsetzbar ist.

Diese Aufgabe wird gelöst durch eine Vorrichtung zur Bestimmung und/oder Überwachung mindestens einer physikalischen oder chemischen Prozessgröße eines Mediums in einem Behältnis umfassend zumindest ein Sensorelement, zumindest ein Gehäusemodul und zumindest einen Flansch, wobei das Sensorelement und der Flansch mit dem Gehäusemodul verbunden sind, wobei der Flansch in einem ersten Teilbereich, welcher erste Teilbereich zumindest teilweise medienberührend ist, zumindest teilweise aus einem ersten Material, welches applikationsspezifisch und/oder kundenspezifisch gewählt ist, gefertigt ist, und wobei der Flansch in einem zweiten Teilbereich, welcher zweite Teilbereich zumindest teilweise umgebungsberührend ist, zumindest teilweise aus einem Kunststoff gefertigt ist.

Es handelt sich also um einen Hybrid-Flansch. In den Bereichen, welche zumindest teilweise medienberührend sind, besteht der Flansch aus dem Material, aus welchem das jeweilige Behältnis gefertigt ist. Somit können weder nachteilige Effekte durch Kontakt einer von zumindest einer der Begrenzungsflächen des Flansches mit dem Medium noch Dichtungsprobleme aufgrund unterschiedlicher Temperaturausdehnungskoeffizienten im Bereich der geflanschten Verbindung auftreten. In dem Medium abgewandten Bereichen wiederum kann ein Kunststoff oder Verbundwerkstoff oder ähnliches genutzt werden. Es versteht sich von selbst, dass die Temperaturausdehnungskoeffizienten des ersten und zweiten Teilbereichs aufeinander abgestimmt werden können. Je nach Beschaffenheit der Umgebung kann der Kunststoff auch spezifisch für diese ausgewählt werden. Kriterien für die Wahl können beispielsweise gegeben sein durch die chemische und/oder thermische Beständigkeit. Müssen solche Kriterien nicht erfüllt werden, kann auch ein besonders günstiges Polymer verwendet werden, was sich nochmals preisreduzierend auswirkt.

Ein erfindungsgemäßer Flanschaufbau spart sowohl Kosten als auch Gewicht. Trotzdem kann der Flansch so angepasst werden, dass er immer im dem Medium zugewandten Bereich aus dem gleichen Material besteht wie das jeweilige Behältnis.

In einer ersten Ausgestaltung ist der erste Teilbereich eine Beschichtung oder eine Plattierung, welche an oder auf dem zweiten Teilbereich angeordnet ist. Das Material des ersten Teilbereichs ist somit frei wählbar und kann an oder auf dem zweiten Teilbereich je nach Behältnis, an welchem die Vorrichtung befestigt werden soll, gewählt werden. Für diese Ausgestaltung bietet sich ein sogenanntes Baukastenprinzip an, bei welchem ein Grundkörper für einen Flansch in den verschiedenen Größen bereitgestellt werden kann, auf welchen je nach Kundenwunsch andere Plattierungen oder Beschichtungen angebracht werden können. Die Plattierungen oder Beschichtungen sollten dabei eine Dicke von mindestens etwa 1mm aufweisen.

Es ist von Vorteil, wenn der erste Teilbereich erfindungsgemäß aus einem Metall, insbesondere

Edelstahl, Tantal oder Hastalloy gefertigt ist. Nicht erfindungsgemäß kann der erste Teilbereich aus einer Keramik, oder aus einem chemisch beständigen Kunststoff, insbesondere PTFE oder PFA gefertigt sein.

Für den ersten Teilbereich wird üblicherweise das Material gewählt, aus welchem das Behältnis gefertigt ist. Falls gewünscht, kann jedoch auch ein anderes Material gewählt werden.

Ebenfalls ist es von Vorteil, wenn der zweite Teilbereich aus einem Faserverbundstoff, insbesondere ein Faserverbundstoff mit einer Polymermatrix, oder einem Polymer, gefertigt ist. Im Gegensatz zu reinen Kunststoffen bieten faserverstärkte Kunststoffe eine sehr viel höhere Steifigkeit bzw. Festigkeit sowie ggf. die Möglichkeit der spezifischen Ausnutzung der anisotropen Eigenschaften. Ebenfalls kann die Polymermatrix, der Kunststoff, an die Umgebungsbedingungen angepasst werden und ggf. nach Kriterien wie chemischer und/oder thermischer Beständigkeit ausgewählt werden.

Alternativ nicht erfindungsgemäß besteht der zweite Teilbereich aus einem metallischen Schaum, insbesondere einem zumindest teilweise von einer Polymermatrix umgebenen Schaum. Metallische Schäume weisen neben einer erhöhten Steifigkeit des jeweiligen Teils eine Vibrationsdämpfung auf, was für bestimmte Anwendungen vorteilhaft sein kann. Aber auch andere Verbundmaterialien sind denkbar, bei welchen zumindest eine Komponente ein Kunststoff bzw. eine Polymermatrix ist.

Es ist von Vorteil, wenn zumindest der zweite Teilbereich so ausgestaltet ist, dass er eine heterogene Struktur aufweist, derart dass in Bereichen des Flansches, welche einer erhöhten äußeren Krafteinwirkung oder einer erhöhten Belastung ausgesetzt sind, eine Verstärkung vorliegt. Im Falle eines faserverstärkten Kunststoffes kann dies beispielsweise zum einen durch eine gezielte Ausrichtung der Fasern vorgenommen werden, aber auch durch Dichtevariationen der Fasern, des Schaums oder eines anderen Materials, innerhalb des Teilbereichs.

In einer weiteren Ausgestaltung ist der Kunststoff im zweiten Teilbereich aus einem Material gefertigt, welches sich durch eine gute Wärmeisolation auszeichnet. Dies dient der thermischen Isolation elektronischer Komponenten gegenüber erhöhter Prozesstemperaturen. Je besser die Wärmeisolation im Bereich des Flansches, desto kürzer können etwaige Halsrohre oder ähnliches, welche üblicherweise zur Wärmeisolation genutzt werden, sein.

In einer besonders bevorzugten Ausgestaltung ist der Flansch aus einem heterogenen Verbundwerkstoff gefertigt, derart, dass in zumindest einem medienberührenden Bereich ein erstes Material angeordnet ist, wobei in zumindest einem umgebungsberührenden Bereich ein zweites Material angeordnet ist, und wobei zwischen diesen beiden Bereichen eine heterogene Mischung des ersten und des zweiten Materials mit einem bestimmten Gradienten angeordnet ist. Diese Fertigungsweise ermöglicht einen fließenden Übergang zwischen dem ersten und zweiten Teilbereich und kann insbesondere in Bezug auf die Verbindungstechnik zwischen erstem und zweitem Teilbereich Vorteile bieten.

Es ist von Vorteil, wenn der zumindest eine Flansch mit dem zumindest einem Gehäusemodul verschweißt oder verklebt ist, wobei in dem Gehäusemodul zumindest eine Komponente einer Elektronikeinheit angeordnet ist. Hierbei kann das Gehäusemodul entweder aus einem Kunststoff, Verbundwerkstoff oder einem Metall gefertigt sein. Je nach Material des Gehäusemoduls ist dann eine andere Verbindungstechnik zweckdienlich.

Schließlich ist es von Vorteil, wenn der erste und der zweite Teilbereich kraft- und formschlüssig miteinander verbunden sind, insbesondere mittels einer Klebeverbindung, einer Schweißverbindung, einer Schraubverbindung, oder durch einen Spritz- oder Gießprozess.

In einer bevorzugten Ausgestaltung ist das Behältnis ein Behälter, und die Vorrichtung ein Feldgerät, welches mittels zumindest eines Flansches am Behälter befestigt ist.

In einer alternativen Ausgestaltung ist das Behältnis eine Rohrleitung, und die Vorrichtung ein Feldgerät, welches mittels zumindest eines Flanschs an der Rohrleitung befestigt ist.

Dabei ist es von Vorteil, wenn die mindestens eine physikalische oder chemische Prozessgröße gegeben ist durch den Durchfluss, den Füllstand, die Dichte, oder die Viskosität eines Mediums.

Ein erfindungsgemäßer Flansch kann mittels vieler verschiedener Verfahren hergestellt werden, beispielsweise mittels eines Spritz- oder Gießprozesses. Aber auch generative Verfahren, insbesondere 3D-Druck-Verfahren sind vorteilhaft möglich.

Die Erfindung und ihre vorteilhaften Ausgestaltungen werden im Folgenden anhand der Figuren Fig. 1 bis Fig. 3. Es zeigt:
Fig. 1: ein Feldgerät, welches mittels eines Flansches an einem Behälter befestigt ist.
Fig. 2: ein Feldgerät, welches mittels zweier Flansche in eine Rohrleitung integriert ist.
Fig. 3 einen erfindungsgemäßen Flansch mit einem ersten und einem zweiten Teilbereich.

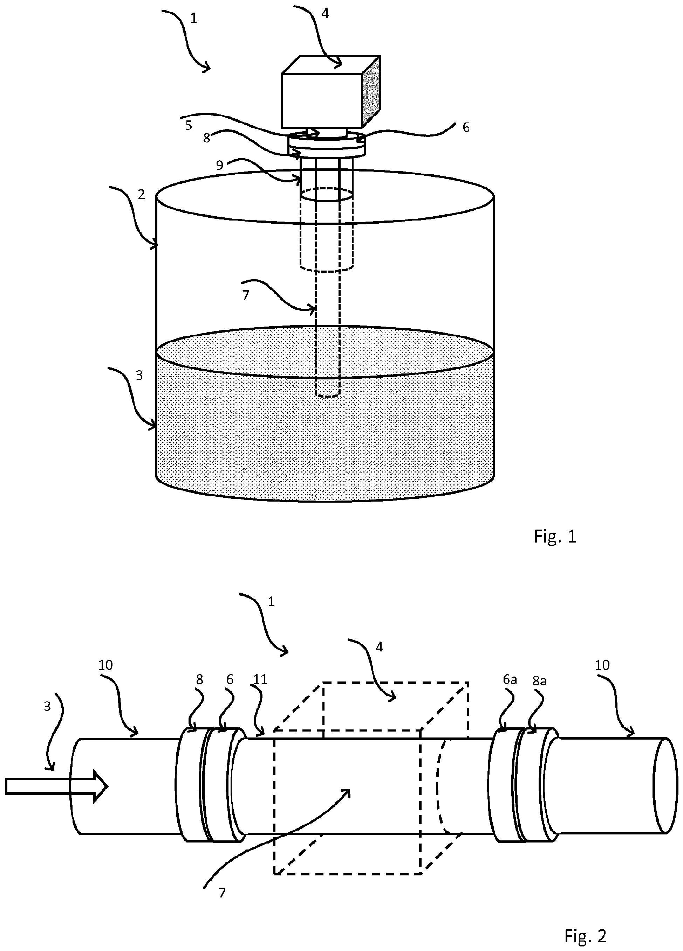

In Fig. 1 ist ein Feldgerät 1 zur Bestimmung und/oder Überwachung zumindest des Füllstands eines Mediums 2 in einem Behälter 3 gezeigt. Das Feldgerät 1 weist ein Gehäusemodul 4 auf, in welchem eine Elektronikeinheit integriert sein kann. Über ein Halsrohr 5 ist das Gehäusemodul 4 mit einem Flansch 6 verbunden. Das Halsrohr 5 und der Flansch 6 umgeben dabei die Sensoreinheit 7, welche ebenfalls mit dem Gehäusemodul 4 verbunden ist.

Der Behälter 2 ist wiederum mit einem Stutzen 9 ausgestattet, an welchem ein Gegenflansch 8 angeschweißt ist. Das Feldgerät 1 wird dann mittels einer Flanschverbindung zwischen dem Flansch 6 und dem Gegenflansch 8 derart mit dem Behälter 2 verbunden, dass die Sensoreinheit 7 durch den Stutzen 9 zumindest teilweise in den Behälter 2 hineinragt. Dort tritt die Sensoreinheit 7 zumindest zeitweise und zumindest teilweise mit dem Medium 3 in Kontakt.

Ein weiteres Beispiel für ein Feldgerät 1 mit zwei Flanschen 6,6a ist in Fig. 2 gezeigt. Hierbei handelt es sich um ein Durchflussmessgerät, welches in eine Rohrleitung 10 integriert ist. Dazu weist die Rohrleitung zwei Gegenflansche 8,8a auf, an welchen das Feldgerät 1 über die beiden Flansche 6,6a angeflanscht ist. Bei dem hier gezeigten Beispiel ist das mindestens eine Gehäusemodul um das Messrohr 11 herum angeordnet. Die Sensoreinheit 7 ist nicht gesondert gezeichnet.

Ein großer Anteil der Flansche 6,6a für Feldgeräte 1 ist aus Metall gefertigt, da die jeweiligen Behältnisse 2, 10 ebenfalls oftmals aus einem Metall gefertigt sind. Diese Flansche 6,6a machen insbesondere bei größeren Nennweiten einen beträchtlichen Anteil des Gewichts und der Herstellungskosten aus. Insbesondere gilt dies für exotische Materialien wie Tantal etc., welche für Spezialanwendungen gebraucht werden. Durch die Verwendung eines erfindungsgemäßen Hybrid-Flansches können sowohl der Kosten- als auch der Gewichtsanteil der Flansche reduziert werden.

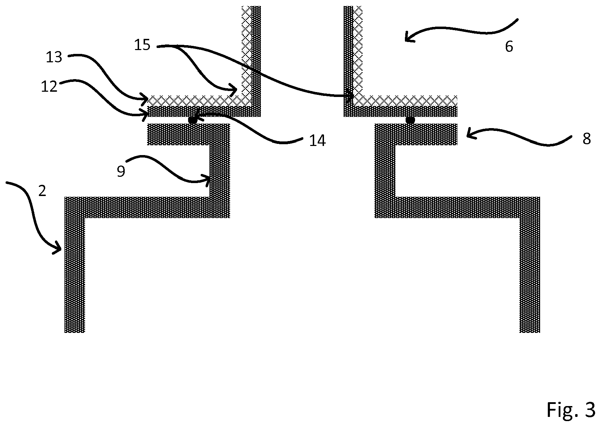

Ein entsprechender Flansch 6,6a in zweidimensionaler Ansicht ist in Fig. 3 gezeigt. Dargestellt ist der Behälter 2 mit dem Stutzen 9 und dem Gegenflansch 8. An dem Behälter 2 ist mittels eines Dichtrings 14 der Flansch 6 des Feldgeräts (hier nicht weiter eingezeichnet) angeflanscht. Der Flansch 6 weist einen ersten Teilbereich 12 und einen zweiten Teilbereich 13 auf. Der erste Teilbereich 12 ist aus dem gleichen Material wie der Behälter gefertigt. Er kann beispielsweise durch eine Plattierung oder Beschichtung gegeben sein. Der zweite Teilbereich 13 ist wiederum zumindest teilweise aus einem Kunststoff gefertigt und kraft- und formschlüssig mit dem ersten Teilbereich 12 verbunden.

Für die Zusammensetzungen des ersten 12 und zweiten Teilbereichs 13 sowie für den jeweiligen Volumenanteil, für die Verbindungstechnik usw. ist eine nicht erschöpfende Vielfalt an Varianten denkbar, welche alle unter die Erfindung fallen. Der zweite Teilbereich 13 kann beispielsweise aus einem Verbundwerkstoff gefertigt sein. In Bereichen erhöhter mechanischer Belastung wie beispielsweise dem mit dem Bezugszeichen 15 gekennzeichneten Bereich kann der Verbundwerkstoff beispielsweise Verstärkungen aufweisen. In einer anderen Variante können die Materialien für den ersten 12 und zweiten 13 Teilbereich auch kontinuierlich über einen Gradienten ineinander übergehen. In diesem Beispiel kann beispielsweise das Material, aus welchem der erste Teilbereich 12 gefertigt ist, in Form von Fasern auch Bestandteil des zweiten Teilbereichs 13 sein. Außerdem können die Materialien für den zweiten Teilbereich 13 und dem für das mindestens eine Gehäusemodul 4 sowie ggf. für das Halsrohr 5 aneinander angepasst werden. Der der Umgebung zugewandte Bereich kann so gewählt werden, dass er optimal an die Umgebungsparameter angepasst wird, beispielsweise wenn eine hohe chemische Beständigkeit des Materials erforderlich ist. Ebenso kann das Material im zweiten Teilbereich 13 an den Wärmeausdehnungskoeffizienten des für den ersten Teilbereich 12 verwendeten Materials angepasst werden.

Die kraft- und formschlüssige Verbindung der beiden Teilbereich 12, 13 kann schließlich beispielsweise mittels Schweiß-, Klebe- oder Schraubverbindungen hergestellt sein. Aber auch ein Spritz- oder Gießprozess ist denkbar.

### Bezugszeichen

- 1: Feldgerät
- 2: Behälter
- 3: Medium
- 4: Gehäusemodul
- 5: Halsrohr
- 6,6a: Flansch
- 7: Sensoreinheit
- 8,8a: Gegenflansch
- 9: Stutzen am Behälter
- 10: Rohrleitung
- 11: Messrohr
- 12: Erster Teilbereich
- 13: Zweiter Teilbereich
- 14: Dichtring
- 15: Bereiche erhöhter mechanischer Belastung

## Patentansprüche

1. Vorrichtung zur Bestimmung und/oder Überwachung mindestens einer physikalischen oder chemischen Prozessgröße eines Mediums in einem Behältnis (2,10) umfassend zumindest ein Sensorelement (7), zumindest ein Gehäusemodul (4) und zumindest einen Flansch (6),
wobei das Sensorelement (7) und der Flansch (6) mit dem Gehäusemodul (4) verbunden sind,
wobei der Flansch (6) in einem ersten Teilbereich (12), welcher erste Teilbereich (12) medienberührend ist, aus einem ersten Material, welches applikationsspezifisch und/oder kundenspezifisch gewählt ist, gefertigt ist, wobei es sich bei dem ersten Material um das Material handelt, aus welchem das Behältnis (2,10) gefertigt ist, wobei der erste Teilbereich (12) aus einem Metall gefertigt ist,
**dadurch gekennzeichnet, dass**
der Flansch (6) in einem zweiten Teilbereich (13), welcher zweite Teilbereich (13) zumindest teilweise umgebungsberührend ist, zumindest teilweise aus einem Kunststoff gefertigt ist.

2. Vorrichtung nach Anspruch 1,
wobei der erste Teilbereich (12) eine Beschichtung oder eine Plattierung ist, welche an oder auf dem zweiten Teilbereich (13) angeordnet ist.

3. Vorrichtung nach Anspruch 1 oder 2,
wobei der erste Teilbereich (12) aus Edelstahl, Tantal oder Hastalloy gefertigt ist.

4. Vorrichtung nach zumindest einem der Ansprüche 1 bis 3,
wobei der zweite Teilbereich (13) aus einem Faserverbundstoff, insbesondere ein Faserverbundstoff mit einer Polymermatrix, oder einem Polymer gefertigt ist.

5. Vorrichtung nach Anspruch 4,
wobei zumindest der zweite Teilbereich (13) so ausgestaltet ist, dass er eine heterogene Struktur aufweist, derart dass in Bereichen (15) des Flansches (6), welche einer erhöhten äußeren Krafteinwirkung oder einer erhöhten Belastung ausgesetzt sind, eine Verstärkung vorliegt.

6. Vorrichtung nach zumindest einem der Ansprüche 4 oder 5,
wobei der Kunststoff im zweiten Teilbereich (13) aus einem Material gefertigt ist, welches sich durch eine gute Wärmeisolation auszeichnet.

7. Vorrichtung nach Anspruch 1,
wobei der Flansch (6) aus einem heterogenen Verbundwerkstoff gefertigt ist, derart, dass in zumindest einem medienberührenden Bereich ein erstes Material angeordnet ist, wobei in zumindest einem umgebungsberührenden Bereich ein zweites Material angeordnet ist, und wobei zwischen diesen beiden Bereichen eine heterogene Mischung des ersten und des zweiten Materials mit einem bestimmten Gradienten angeordnet ist.

8. Vorrichtung nach zumindest einem der vorhergehenden Ansprüche,
wobei der zumindest eine Flansch (6) mit dem zumindest einem Gehäusemodul (4) verschweißt oder verklebt ist, und wobei in dem Gehäusemodul (4) zumindest eine Komponente einer Elektronikeinheit angeordnet ist.

9. Vorrichtung nach zumindest einem der vorhergehenden Ansprüche,
wobei der erste (12) und der zweite (13) Teilbereich kraft- und formschlüssig miteinander verbunden sind, insbesondere mittels einer Klebeverbindung, einer Schweißverbindung, einer Schraubverbindung, oder durch einen Spritz- oder Gießprozess.

10. Vorrichtung nach zumindest einem der vorhergehenden Ansprüche,
wobei das Behältnis (2,10) ein Behälter (2) ist, und die Vorrichtung ein Feldgerät (1), welches mittels zumindest einem Flansch (6) am Behälter befestigt ist.

11. Vorrichtung nach zumindest einem der Ansprüche 1 bis 10,
wobei das Behältnis (2,10) eine Rohrleitung (10) ist, und die Vorrichtung ein Feldgerät (1'), welches mittels zumindest einem Flansch (6,6a) an der Rohrleitung (10) befestigt ist.

12. Vorrichtung nach zumindest einem der vorhergehenden Ansprüche,
wobei die mindestens eine physikalische oder chemische Prozessgröße gegeben ist durch den Durchfluss, den Füllstand, die Dichte, oder die Viskosität eines Mediums.

## Claims

1. Apparatus for determining and/or monitoring at least a physical or chemical process variable of a medium in a container (2, 10) comprising at least a sensor element (7), at least a housing module (4) and at least a flange (6),
wherein the sensor element (7) and the flange (6) are connected to the housing module (4),
wherein in a first section (12) of the flange (6) that is in contact with the medium the flange is made from a first material, which is selected as an application-specific or customer-specific material,
wherein the first material is the material from which the container (2, 10) is made, wherein the first section (12) is made from a metal,
**characterized in that**
the flange (6) is at least partially made from a plastic material in a second section (13), wherein said second section (13) is at least partially in contact with the environment.

2. Apparatus as claimed in Claim 1,
wherein the first section (12) is a coating or a cladding which is arranged on or at the second section (13).

3. Apparatus as claimed in Claim 1 or 2,
wherein the first section (12) is made from stainless steel, tantalum or Hastelloy.

4. Apparatus as claimed in at least one of the Claims 1 to 3,
wherein the second section (13) is made from a fiber composite, particularly a fiber composite with a polymer matrix, or a polymer.

5. Apparatus as claimed in Claim 4,
wherein at least the second section (13) is designed in such a way that it has a heterogenous structure such that there is a reinforcement in areas (15) of the flange (6) that are subjected to a higher external force or a higher load.

6. Apparatus as claimed in at least one of the Claims 4 or 5,
wherein the plastic material in the second section (13) is made from a material which is **characterized by** good thermal insulation.

7. Apparatus as claimed in Claim 1,
wherein the flange (6) is made from a heterogenous composite material in such a way that a first material is arranged in at least an area in contact with the medium, wherein a second material is arranged in at least an area in contact with the environment, and wherein a heterogeneous mix of the first and the second material is arranged between these two areas with a certain gradient.

8. Apparatus as claimed in at least one of the previous claims,
wherein the at least one flange (6) is welded or stuck to the at least one housing module (4), and
wherein at least one component of an electronics unit is arranged in the housing module (4).

9. Apparatus as claimed in at least one of the previous claims,
wherein the first section (12) and the second section (13) are connected to one another by means of a force-locked, positive-fit connection, particularly by means of an adhesive connection, a welding connection, a screw connection or by an injection or casting process.

10. Apparatus as claimed in at least one of the previous claims,
wherein the container (2, 10) is a vessel (2) and the apparatus is a field device (1), which is secured to the vessel by means of at least a flange (6).

11. Apparatus as claimed in at least one of the Claims 1 to 10,
wherein the container (2, 10) is a pipe (10), and the apparatus is a field device (1'), which is secured to the pipe (10) by means of at least one flange (6, 6a).

12. Apparatus as claimed in at least one of the previous claims,
wherein the at least one physical or chemical process variable is given by the flow, the level, the density, or the viscosity of a medium.

## Revendications

1. Dispositif destiné à la détermination et/ou à la surveillance d'au moins une grandeur de process physique ou chimique d'un produit dans un récipient (2, 10) comprenant au moins un élément capteur (7), au moins un module de boîtier (4) et au moins une bride (6),
l'élément capteur (7) et la bride (6) étant reliés au module de boîtier (4),
la bride (6) étant réalisée dans une première zone partielle (12), laquelle première zone partielle (12) est en contact avec le produit, dans un premier matériau, qui est choisi en fonction de l'application et/ou du client,
le premier matériau étant le matériau dans lequel le récipient (2, 10) est fabriqué, la première zone partielle (12) étant fabriquée en un métal,
**caractérisé**
**en ce que** la bride (6) est fabriquée au moins partiellement en une matière plastique dans une deuxième zone partielle (13), laquelle deuxième zone partielle (13) est au moins partiellement en contact avec l'environnement.

2. Dispositif selon la revendication 1,
pour lequel la première zone partielle (12) est un revêtement ou un placage qui est disposé sur la deuxième zone partielle (13).

3. Dispositif selon la revendication 1 ou 2,
pour lequel la première zone partielle (12) est fabriquée en acier inoxydable, en tantale ou en Hastalloy.

4. Dispositif selon au moins l'une des revendications 1 à 3,
pour lequel la deuxième zone partielle (13) est fabriquée en un matériau composite à fibres, notamment un matériau composite à fibres avec une matrice polymère, ou en un polymère.

5. Dispositif selon la revendication 4,
pour lequel au moins la deuxième zone partielle (13) est conçue de telle sorte qu'elle présente une structure hétérogène, de telle sorte qu'un renforcement est présent dans des zones (15) de la bride (6), qui sont soumises à une action de force extérieure accrue ou à une charge accrue.

6. Dispositif selon au moins l'une des revendications 4 ou 5,
pour lequel la matière plastique dans la deuxième zone partielle (13) est fabriquée en un matériau qui se **caractérise par** une bonne isolation thermique.

7. Dispositif selon la revendication 1,
pour lequel la bride (6) est fabriquée en un matériau composite hétérogène, de telle sorte qu'un premier matériau est disposé dans au moins une zone en contact avec le produit, un deuxième matériau étant disposé dans au moins une zone en contact avec l'environnement, et un mélange hétérogène du premier et du deuxième matériau étant disposé entre ces deux zones avec un certain gradient.

8. Dispositif selon au moins l'une des revendications précédentes,
pour lequel l'au moins une bride (6) est soudée ou collée à l'au moins un module de boîtier (4), et
pour lequel au moins un composant d'une unité électronique est disposé dans le module de boîtier (4).

9. Dispositif selon au moins l'une des revendications précédentes,
pour lequel la première zone partielle (12) et la deuxième zone partielle (13) sont reliées l'une à l'autre par adhérence et par complémentarité de forme, notamment au moyen d'une liaison par collage, d'une liaison par soudage, d'une liaison par vissage, ou par un processus d'injection ou de coulée.

10. Dispositif selon au moins l'une des revendications précédentes,
pour lequel le récipient (2, 10) est un réservoir (2) et le dispositif est un appareil de terrain (1), lequel appareil est fixé au réservoir au moyen d'au moins une bride (6).

11. Dispositif selon au moins l'une des revendications 1 à 10,
pour lequel le récipient (2, 10) est une conduite (10), et le dispositif comprend un appareil de terrain (1'), lequel appareil est fixé à la conduite (10) au moyen d'au moins une bride (6, 6a).

12. Dispositif selon au moins l'une des revendications précédentes,
pour lequel l'au moins une grandeur de process physique ou chimique est donnée par le débit, le niveau, la densité, ou la viscosité d'un produit.
